(19) Europäisches Patentamt
European Patent Office
Office européen des brevets

(11) **EP 3 301 474 A1**

(12) **EUROPEAN PATENT APPLICATION**

(43) Date of publication:
04.04.2018 Bulletin 2018/14

(51) Int Cl.:
*G01S 13/42* (2006.01)　　*G01S 13/93* (2006.01)
*G01S 13/86* (2006.01)　　*G01S 13/60* (2006.01)

(21) Application number: 17187861.4

(22) Date of filing: 25.08.2017

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: 30.09.2016　JP 2016193045

(71) Applicant: **Panasonic Intellectual Property Management Co., Ltd.**
**Osaka-shi, Osaka 540-6207 (JP)**

(72) Inventors:
• **HIRAI, Yoshito**
**Osaka-shi, Osaka 540-6207 (JP)**
• **MUKAI, Hirohito**
**Osaka-shi, Osaka 540-6207 (JP)**
• **CAO, Yunyun**
**Osaka-shi, Osaka 540-6207 (JP)**
• **TANAKA, Hiroshi**
**Osaka-shi, Osaka 540-6207 (JP)**

(74) Representative: **Grünecker Patent- und Rechtsanwälte**
**PartG mbB**
**Leopoldstraße 4**
**80802 München (DE)**

(54) **STATE CALCULATION APPARATUS, STATE CALCULATION METHOD, AND RECORDING MEDIUM STORING PROGRAM FOR MOVING OBJECT**

(57) A state calculation apparatus includes an receiver that receives azimuths of objects around a vehicle and their relative velocities to the vehicle, detected by a first sensor used for the vehicle, as target information, and a velocity and a travel direction of the vehicle, detected by a second sensor installed on the vehicle and having an error variance, as state information, and a controller that calculates velocities and travel directions of the vehicle, using the state information and based on a plurality of the azimuths and a plurality of the relative velocities extracted from the target information and that outputs at least either a velocity or a travel direction of the vehicle by using a specified filter to filter mean values of and error variances in the calculated velocities and travel directions and at least either the velocity or the travel direction detected by the second sensor.

FIG. 1

**Description**

BACKGROUND

1. Technical Field

The present disclosure relates to a state calculation apparatus, a state calculation method, and a recording medium storing a program by which information indicating a state of a moving object is calculated.

2. Description of the Related Art

Examples of conventional state calculation apparatuses that calculate information indicating a state of a moving object include an on-board apparatus disclosed in Japanese Unexamined Patent Application Publication No. 2014-191596. When filtering data acquired from a vehicle state detection unit installed on a vehicle, the on-board apparatus reflects results of course prediction based on a radar apparatus or a camera.

SUMMARY

In Japanese Unexamined Patent Application Publication No. 2014-191596, however, errors between results acquired from a vehicle state sensor and actual behaviors of the vehicle may occur due to various factors. In such a case, it is difficult for the on-board apparatus of Japanese Unexamined Patent Application Publication No. 2014-191596 to correctly estimate a state of the vehicle.

One non-limiting and exemplary embodiment provides a state calculation apparatus, a state calculation method, and a recording medium storing a program by which a state of a moving object can be calculated more accurately.

In one general aspect, the techniques disclosed here feature an receiver that receives azimuths of a plurality of objects existing around a vehicle and relative velocities of the objects with respect to the vehicle, the azimuths and the relative velocities being detected by a first sensor used for the vehicle, as target information, and that receives a velocity and a travel direction of the vehicle which are detected by a second sensor installed on the vehicle and having an error variance, as state information, and a controller that calculates a plurality of velocities and a plurality of travel directions of the vehicle with use of the state information and based on a plurality of the azimuths and a plurality of the relative velocities which are extracted from the target information and that outputs at least either of a velocity or a travel direction of the vehicle by using a specified filter to filter a mean value of and an error variance in the plurality of calculated velocities of the vehicle, a mean value of and an error variance in the plurality of calculated travel directions of the vehicle, and at least either of the velocity or the travel direction of the vehicle which is detected by the second sensor.

The disclosure provides a state calculation apparatus, a state calculation method, and a recording medium storing a program by which a state of a moving object can be calculated more accurately.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may individually be obtained by the various embodiments and features of the specification and drawings, which need not all be provided in order to obtain one or more of such benefits and/or advantages.

BRIEF DESCRIPTION OF THE DRAWINGS

Fig. 1 is a block diagram illustrating a configuration of a state calculation apparatus according to an embodiment of the disclosure;

Fig. 2 is a diagram illustrating relation among an installation position of a first sensor unit of Fig. 1, a travel velocity, and a travel azimuth;

Fig. 3 is a diagram illustrating an example of a power map of azimuth-Doppler velocity that is used in a travel estimation unit of Fig. 1;

Fig. 4 is a diagram illustrating a plurality of stationary objects in a viewing angle of the first sensor unit of Fig. 1;

Fig. 5 is a diagram illustrating a stationary object curve and stationary object margins in the power map of azimuth-Doppler velocity;

Fig. 6 is a flow chart illustrating a processing procedure in the travel estimation unit of Fig. 1;

Fig. 7 is a block diagram illustrating a configuration of a filter unit of Fig. 1;

Fig. 8 is a diagram illustrating timing of information input into the filter unit of Fig. 1;

Fig. 9 is a diagram illustrating changes over time in an error variance in a vehicle velocity in a covariance matrix estimate of errors;

Fig. 10 is a block diagram illustrating a configuration of a state calculation apparatus according to a modification of the disclosure; and

Fig. 11 is a flow chart illustrating processing in an object tracking unit, an object identification unit, and an application unit of Fig. 10.

DETAILED DESCRIPTION

<1. Configuration of state calculation apparatus of embodiment>

Hereinbelow, a state calculation apparatus 1 according to an embodiment of the disclosure will be described with reference to the drawings.

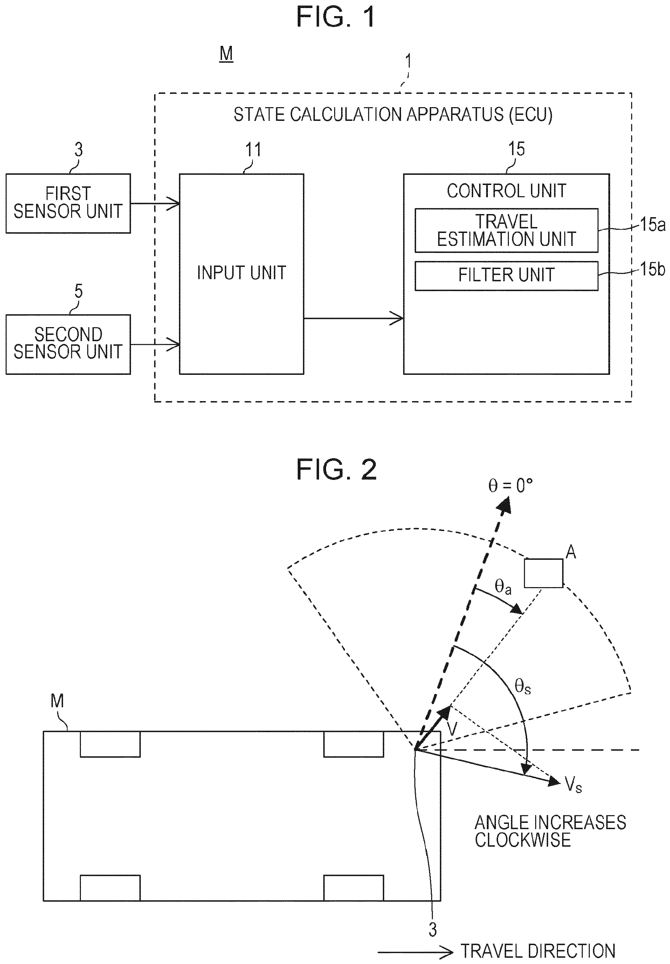

In Fig. 1, the state calculation apparatus 1 calculates a state of a moving object through so-called sensor fusion based on target information from a first sensor unit 3 that will be described later and state information from a second sensor unit 5. In description below, the state calculation apparatus 1 may be referred to as ECU 1.

In the disclosure, as illustrated in Fig. 1, the ECU 1, the first sensor unit 3, and the second sensor unit 5 are installed on a vehicle M as an example of a moving object.

Initially, the first sensor unit 3 will be described.

The first sensor unit 3 is a radar sensor with a pulse method with use of radar transmitted waves in millimeter waveband or a radar sensor with frequency-modulated continuous wave (FMCW) method, for instance.

The first sensor unit 3 outputs radar transmitted waves at specified angle intervals from an array antenna (illustration is omitted) toward inside of a detection area for the array antenna. The radar transmitted waves outputted from the array antenna are reflected by objects existing around the vehicle M and the array antenna of the first sensor unit 3 receives at least a portion of the reflected waves. In the first sensor unit 3, a signal processing circuit (not illustrated) carries out frequency analysis and azimuth estimation for signals of a plurality of branches corresponding to array elements. As a result, the first sensor unit 3 calculates an azimuth (viewing angle azimuth) of a reflection point with respect to a predetermined reference azimuth, a distance from the vehicle M to the reflection point, reception intensity of return waves, and a Doppler velocity of the reflection point with respect to the vehicle M, as the target information, and transmits the target information to the ECU 1 in pursuant to CAN, FlexRay, or a predetermined data transmission scheme, for instance.

The second sensor unit 5 includes a plurality of sensors that detect a traveling state of the ECU 1 (the vehicle M, for instance). In the disclosure, the second sensor unit 5 detects at least a velocity (hereinafter referred to as vehicle velocity) and a yaw rate of the vehicle M. The second sensor unit 5 may detect a yaw angle instead of the yaw rate. The vehicle velocity is detected by a well-known vehicle velocity sensor. The yaw rate is detected by a well-known rudder angle sensor provided on a steering wheel. The yaw rate is detected by a well-known yaw sensor, for instance.

The second sensor unit 5 outputs the detected vehicle velocity and the detected yaw rate as the state information to the ECU 1 in pursuant to CAN, FlexRay, or a predetermined data transmission scheme, for instance.

The ECU 1 includes an input unit 11 and a control unit 15 on a substrate housed in a case.

The input unit 11 receives the target information from the first sensor unit 3. The input unit 11 outputs the received target information to the control unit 15 under control of the control unit 15. The control unit 15 thereby acquires the target information.

The input unit 11 further serves as an input interface for reception of the state information from the second sensor unit 5. The input unit 11 outputs the received state information to the control unit 15 under the control of the control unit 15. The control unit 15 thereby acquires the state information.

The control unit 15 includes a travel estimation unit 15a and a filter unit 15b. The control unit 15 further includes a program memory, a working memory, and a microcomputer, for instance. Into the working memory of the control unit 15, the target information outputted from the input unit 11 and the state information outputted from the input unit 11 are inputted.

The program memory is a nonvolatile memory such as EEPROM. Programs in which processing procedures that will be described later are described are stored in the program memory in advance.

The working memory is a semiconductor memory such as SRAM and is used for various calculations when the microcomputer executes the programs.

The microcomputer executes the programs by using the working memory and functions at least as the travel estimation unit 15a and the filter unit 15b.

<2. Processing in state calculation apparatus>

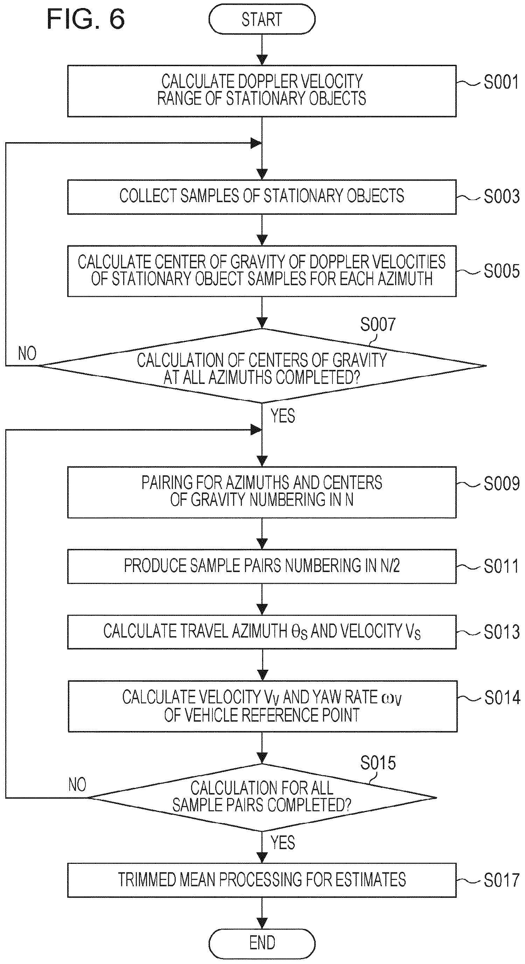

Initially, processing in the travel estimation unit 15a will be described with reference to Figs. 1, 2, and 3 and a flow chart of Fig. 6.

The travel estimation unit 15a acquires the azimuth and the Doppler velocity of the reflection point based on the target information acquired from the first sensor unit 3, calculates a travel velocity $V_S$ and a travel azimuth $\theta_S$ of the first sensor unit 3 based on the azimuth and the Doppler velocity of the reflection point that have been acquired, and calculates a travel velocity $V_V$ and a yaw rate $\omega_V$ of the vehicle M.

As illustrated in Fig. 2, the travel azimuth $\theta_S$ is an azimuth in which the first sensor unit 3 travels, with respect on an axial direction (azimuth with $\theta = 0°$ in Fig. 2) of the first sensor unit 3. In Fig. 2, the first sensor unit 3 is provided on a front left side of the vehicle M with respect to a travel direction of the vehicle M, for instance, in a bumper of the vehicle M.

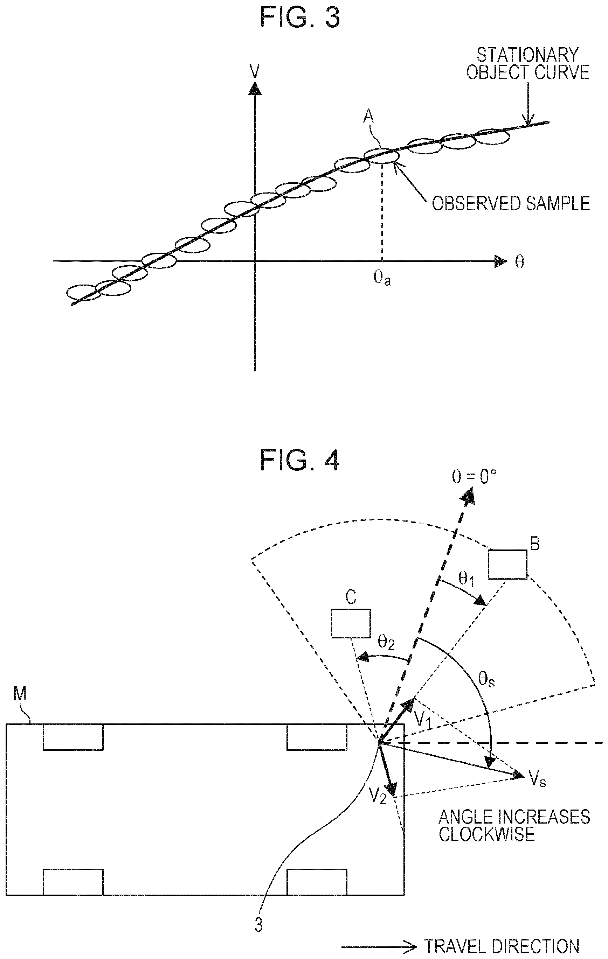

Fig. 3 illustrates an example of a power map of azimuth $\theta$ - Doppler velocity V acquired by the travel estimation unit 15a.

In Fig. 3, a horizontal axis represents the azimuth $\theta$ and a vertical axis represents the Doppler velocity V. Each round mark corresponds to a return wave and a size of each round mark represents power (return wave intensity).

In Fig. 2, the vehicle M is moving in the travel direction $\theta_S$ with respect to the axial direction of the first sensor unit 3 and at the travel velocity $V_S$. The Doppler velocity V of a stationary object that is measured by the first sensor unit 3 can be expressed by equation (1) below.

$$V = V_S \cdot \cos(\theta_S - \theta) \quad ... \ (1)$$

The stationary object A of Fig. 2 is represented on the power map of azimuth $\theta$ - Doppler velocity V as illustrated in Fig. 3 as the example. In Figs. 2 and 3, $\theta_a$ is a viewing angle azimuth (azimuth of the reflection point with respect to the predetermined reference azimuth) of the stationary object A from the first sensor unit 3.

The viewing angle azimuth $\theta$ and the Doppler velocity V of the stationary object are observations and known values. Based on above equation (1), therefore, equation (2) below holds.

$$V_S = \frac{V}{\cos(\theta_S - \theta)} \quad ... \quad (2)$$

On condition that stationary objects B and C exist at two different azimuths, that is, at viewing angle azimuths $\theta_1$ and $\theta_2$, as illustrated in Fig. 4 as an example, in a viewing angle of the first sensor unit 3 and that Doppler velocities of the stationary objects B and C are $V_1$ and $V_2$, respectively, following simultaneous equations made of equation (3) and equation (4) are obtained.

$$V_1 = V_S \cdot \cos(\theta_S - \theta_1) \quad \Rightarrow \quad V_S = \frac{V_1}{\cos(\theta_S - \theta_1)} \quad ... \quad (3)$$

$$V_2 = V_S \cdot \cos(\theta_S - \theta_2) \quad \Rightarrow \quad V_S = \frac{V_2}{\cos(\theta_S - \theta_2)} \quad ... \quad (4)$$

Based on the simultaneous equations made of equation (3) and equation (4) above, the radar travel velocity $V_S$ and the travel azimuth $\theta_S$ can be calculated by equations (5) and (6) from the viewing angle azimuths and the Doppler velocities of the two stationary objects.

$$\theta_S = \tan^{-1} \cdot \frac{V_2 \cdot \cos\theta_1 - V_1 \cdot \cos\theta_2}{V_1 \cdot \sin\theta_2 - V_2 \cdot \sin\theta_1} \quad ... \quad (5)$$

$$V_S = \frac{V_1}{\cos(\theta_S - \theta_1)} \quad \text{or} \quad \frac{V_2}{\cos(\theta_S - \theta_2)} \cdots \quad (6)$$

The travel estimation unit 15a finds the travel azimuth $\theta_S$ and the travel velocity $V_S$ by using equations (5) and (6) for target information on the stationary objects among the target information acquired from the first sensor unit 3. Above equation (1) holds for stationary objects and thus the travel azimuth $\theta_S$ and the travel velocity $V_S$ can be derived from above equations (5) and (6).

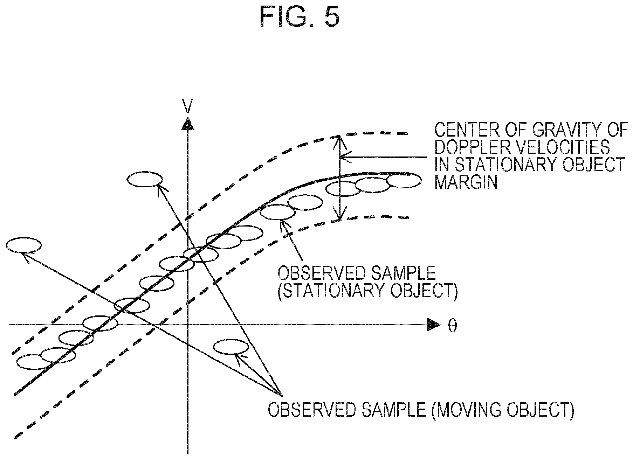

From the state information (that is, the vehicle velocity and the yaw rate) acquired from the second sensor unit 5, the travel estimation unit 15a initially calculates a theoretical stationary object curve on the power map of azimuth $\theta$ - Doppler velocity V based on equation (1). The stationary object curve theoretically refers to a curve along distribution of samples that are observed on the power map of azimuth $\theta$ - Doppler velocity V even if the vehicle M travels relative to a stationary object and an example thereof is the curve drawn by a solid line in Fig. 5.

The travel estimation unit 15a calculates a range of Doppler velocity values of stationary objects for each viewing angle azimuth from the first sensor unit 3 by using preset setting values with reference to the calculated stationary object curve (step S001 in Fig. 6). The Doppler velocity range is represented as two dashed curves in Fig. 5, for instance. Hereinbelow, the range between an upper limit and a lower limit of the Doppler velocity for each viewing angle azimuth will be referred to as a stationary object margin.

There is a high possibility that return waves having return wave intensities equal to or higher than a specified threshold in the stationary object margin in the power map of azimuth $\theta$ - Doppler velocity V derive from return waves from stationary objects. Therefore, the travel estimation unit 15a extracts, as samples of stationary objects, azimuths $\theta$ and Doppler velocities V corresponding to the return waves having the return wave intensities equal to or higher than the specified threshold in the stationary object margin (step S003 in Fig. 6).

The travel estimation unit 15a calculates, as a center of gravity, a mean value of Doppler velocities V of stationary object samples existing at the same azimuth $\theta$ among the extracted stationary object samples (step S005 in Fig. 6). This processing is omitted for azimuths $\theta$ at which no stationary object exists.

If the centers of gravity of stationary objects at azimuths $\theta$ numbering in N have been calculated as a result of execution of step S005 in Fig. 6 for the stationary objects at the azimuths $\theta$ numbering in N (YES in step S007 in Fig. 6), for instance, the travel estimation unit 15a carries out pairing for the acquired (azimuths $\theta$, centers of gravity at azimuths $\theta$) numbering in N and thereby produces sample pairs $\{(\theta_1, V_1), (\theta_2, V_2)\}$ numbering in N/2 (steps S009 and S011 in Fig. 6).

Subsequently, the travel estimation unit 15a calculates the travel azimuth $\theta_S$ and the travel velocity $V_S$ for each sample pair of stationary objects by using equations (5) and (6) (step S013 in Fig. 6).

Subsequently, the travel estimation unit 15a calculates the velocity $V_V$ and the yaw rate $\omega_V$ of a vehicle reference point (such as a center of rear wheels of the vehicle) by using $\theta_S$ and $V_S$ calculated in step S013 and information on an installation position of the first sensor unit 3 on the vehicle M (step S014 in Fig. 6).

Upon completion of above-mentioned steps S009 to S014 for all the sample pairs (YES in step S015 in Fig. 6), values of $\omega_V$ numbering in N/2 and values of $V_V$ numbering in N/2 have been calculated.

There are errors in the azimuth (viewing angle azimuth) and the Doppler velocity of the reflection point that are included in the target information outputted from the first sensor unit 3. Accordingly, the errors are superimposed on the values of $\omega_V$ numbering in N/2 and the values of $V_V$ numbering in N/2 that are calculated in the above processing. In order to reduce influence of the errors, the travel estimation unit 15a carries out trimmed mean processing for the values of $\omega_V$ numbering in N/2 and the values of $V_V$ numbering in N/2 that are results of calculation and outputs resultant mean values as the yaw rate $\omega_V$ and the travel velocity $V_V$ (step S017 in Fig. 6).

The travel estimation unit 15a carries out sorting processing for the acquired values of $\omega_V$ numbering in N/2 in ascending order or in descending order, deletes specified proportions at top and bottom (respectively 20%, for instance), thereafter finds the mean value from remaining medium values (60%, for instance) of $\omega_V$, and outputs the mean value as the yaw rate $\omega_V$. The travel estimation unit 15a further calculates and outputs an error variance $P_{\omega V}$ in the plurality of values of $\omega_V$ distributed as the medium values.

Simultaneously, the travel estimation unit 15a carries out sorting processing for the acquired values of $V_V$ numbering in N/2 in ascending order or in descending order, deletes specified proportions at top and bottom (respectively 20%, for instance), thereafter finds the mean value from remaining medium values (60%, for instance) of $V_V$, and outputs the mean value as the travel velocity $V_V$. The travel estimation unit 15a further calculates and outputs an error variance $P_{VV}$ in the plurality of values of $V_V$ distributed as the medium values.

Subsequently, processing in the filter unit 15b will be described.

Initially, the microcomputer calculates an error variance in the vehicle velocity and an error variance in the yaw rate from the state information (the vehicle velocity and the yaw rate in the disclosure, for instance) outputted from the second sensor unit 5. The error variance in the vehicle velocity and the error variance in the yaw rate are characteristics of the second sensor unit 5 and thus are not limited to calculations provided by the microcomputer. For instance, the error variance in the vehicle velocity and the error variance in the yaw rate may be retained in the microcomputer in advance.

Into the filter unit 15b, the vehicle velocity and the yaw rate that are outputted from the second sensor unit 5, the error variances in the vehicle velocity and the yaw rate, the yaw rate $\omega_V$ and the travel velocity $V_V$ that are outputted from the travel estimation unit 15a, and the error variances $P_{\omega V}$ and $P_{VV}$ in the yaw rate $\omega_V$ and the travel velocity $V_V$ are inputted. The filter unit 15b applies Bayesian filtering processing for input signals. In the disclosure, processing with use of a Kalman filter will be described as an example of the Bayesian filtering processing.

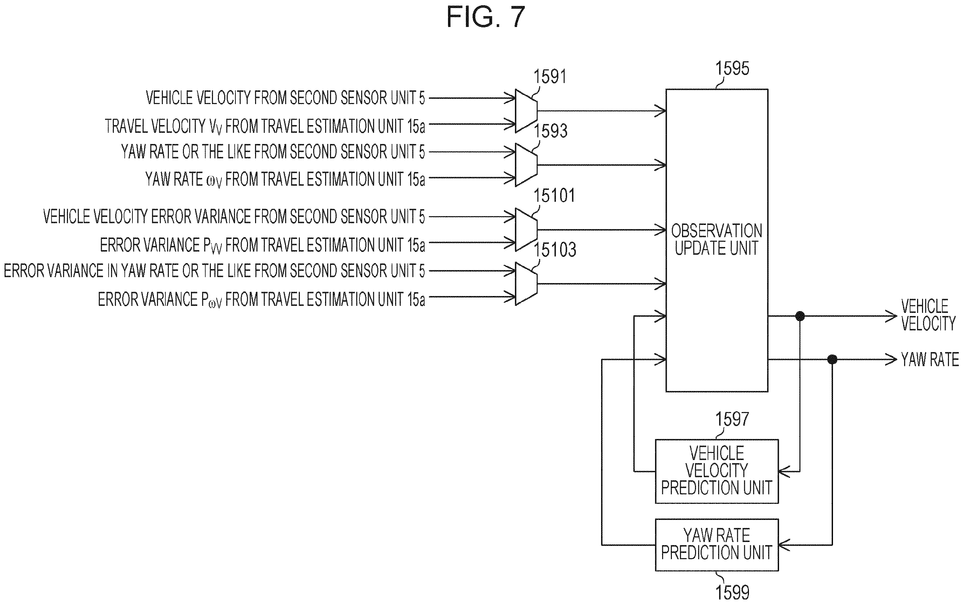

Fig. 7 is a block diagram illustrating a configuration of the filter unit 15b.

In Fig. 7, the filter unit 15b includes a vehicle velocity selection unit 1591, a yaw rate selection unit 1593, an observation update unit 1595, a vehicle velocity prediction unit 1597, a yaw rate prediction unit 1599, a vehicle velocity variance selection unit 15101, and a yaw rate variance selection unit 15103.

The vehicle velocity selection unit 1591 selects inputted one of the vehicle velocity to be inputted from the second sensor unit 5 and the travel velocity $V_V$ to be inputted from the travel estimation unit 15a and outputs the selected one as the vehicle velocity. The vehicle velocity from the second sensor unit 5 is inputted at intervals of tens of milliseconds, for instance. Input timing from the second sensor unit 5 and input timing from the travel estimation unit 15a may be different. In case where the input timing from the second sensor unit 5 and the input timing from the travel estimation unit 15a are substantially the same, the vehicle velocity selection unit 1591 outputs any one of the vehicle velocity and the travel velocity $V_V$ earlier and outputs the other later.

The yaw rate selection unit 1593 selects inputted one of the yaw rate to be inputted from the second sensor unit 5 and the yaw rate $\omega_V$ to be inputted from the travel estimation unit 15a and outputs the one as the yaw rate. The yaw rate from the second sensor unit 5 is inputted at intervals of tens of milliseconds, for instance. As is the case with the above, input timing from the second sensor unit 5 and input timing from the travel estimation unit 15a may be different. In case where the input timing from the second sensor unit 5 and the input timing from the travel estimation unit 15a are substantially the same, the yaw rate selection unit 1593 outputs any one of the yaw rate and the value $\omega_V$ earlier and outputs the other later.

The vehicle velocity variance selection unit 15101 selects inputted one of an error variance in the vehicle velocity to be inputted from the second sensor unit 5 and an error variance $P_{VV}$ to be inputted from the travel estimation unit 15a and outputs the selected one as the error variance in the vehicle velocity. From the second sensor unit 5, the vehicle velocity and the error variance in the vehicle velocity are inputted in synchronization into the vehicle velocity selection unit 1591 and the vehicle velocity variance selection unit 15101, respectively. Therefore, the vehicle velocity variance selection unit 15101 makes a selection from the error variance in the vehicle velocity and the error variance $P_{VV}$ in the same manner as the vehicle velocity selection unit 1591 does. In case where there is no input of the error variance in the vehicle velocity from the second sensor unit 5 or in case where there is no input of the error variance $P_{VV}$ from the travel estimation unit 15a, a predetermined and fixed error variance may be given to the vehicle velocity variance selection unit 15101. As the fixed error variance, error variance values the first sensor unit 3 and the second sensor unit 5 have may be measured in advance and given to the vehicle velocity variance selection unit 15101.

The yaw rate variance selection unit 15103 selects inputted one of the error variance in the yaw rate to be inputted from the second sensor unit 5 and the error variance $P_{\omega V}$ to be inputted from the travel estimation unit 15a and outputs the selected one as the error variance in the yaw rate. From the second sensor unit 5, the yaw rate and the error variance in the yaw rate are inputted in synchronization into the yaw rate selection unit 1593 and the yaw rate variance selection unit 15103, respectively. Therefore, the yaw rate variance selection unit 15103 selects the inputted one of the error variance in the yaw rate and the error variance $P_{\omega V}$ and outputs the selected one, in the same manner as the vehicle velocity variance selection unit 15101 does. In case where there is no input of the error variance in the yaw rate from the second sensor unit 5 or in case where there is no input of the error variance $P_{\omega V}$ from the travel estimation unit 15a, a predetermined and fixed error variance may be given to the yaw rate variance selection unit 15103. As the fixed error variance, error variance values the first sensor unit 3 and the second sensor unit 5 have may be measured in advance and given to the yaw rate variance selection unit 15103.

Into the observation update unit 1595, output (the vehicle velocity and the travel velocity $V_S$) of the vehicle velocity selection unit 1591, output (the yaw rate and $\omega_V$) of the yaw rate selection unit 1593, a predicted value of the vehicle velocity outputted from the vehicle velocity prediction unit 1597, a predicted value of the yaw rate outputted from the yaw rate prediction unit 1599, output of the vehicle velocity variance selection unit 15101, and output of the yaw rate variance selection unit 15103 are inputted. The observation update unit 1595 carries out observation update processing for the Kalman filter.

The Kalman filter will be described below. A linear Kalman filter is used as the Kalman filter, for instance. In the Kalman filter, a system to be estimated is modeled out of a state equation that represents state transition of the system and an observation equation that represents an observation model of a sensor.

$$x_k = F_k \cdot x_{k-1} + G_k \cdot w_k \qquad \ldots (7)$$

$$z_k = H_k \cdot x_k + v_k \qquad \ldots (8)$$

Equation (7) and equation (8) respectively represent the state equation and the observation equation of the Kalman filter. In the equations, $F_k$ is a time transition model of system state, $G_k$ is a time transition model of system noise, $w_k$ is a system noise with zero mean and a covariance matrix $Q_k$, $H_k$ is an observation model, and $v_k$ is an observation noise with zero mean and a covariance matrix $R_k$, where k denotes time.

A system model $x_k$ defined above is estimated with use of algorithm of the Kalman filter that will be presented below. Estimation based on the Kalman filter includes a prediction step and an observation update step.

$$x^\wedge_{k|k-1} = F_k \cdot x^\wedge_{k-1|k-1} \qquad \ldots (9)$$

$$P_{k|k-1} = F_k \cdot P_{k-1|k-1} \cdot F_k^T + G_k Q_k G_k^T \qquad \ldots (10)$$

Equation (9) and equation (10) represent calculations of the prediction step in the Kalman filter. Equation (9) represents calculation of a predicted estimate and equation (10) represents calculation of a predicted error variance matrix. In the calculation of the predicted estimate, a subsequent state $x^\wedge_{k|k-1}$ is predicted from a previous estimate $x^\wedge_{k-1|k-1}$ with use of the time transition model $F_k$. In the calculation of the predicted error covariance matrix, state transition of the covariance matrix is calculated from a previous covariance matrix $P_{k-1|k-1}$ and the time transition model $F_k$ thereof and an increase in the system noise is calculated from the system noise covariance matrix $Q_k$ and the time transition model $G_k$ thereof. The predicted covariance matrix $P_{k|k-1}$ is calculated by addition of the state transition and the increase in the system noise. The predicted estimate from equation (9) and the predicted error covariance matrix from equation (10) are made into output of the prediction step.

$$e_k = z_k - H_k \cdot x^\wedge_{k|k-1} \qquad \ldots (11)$$

$$S_k = R_k + H_k \cdot P_{k|k-1} \cdot H_k^T \qquad \ldots (12)$$

$$K_k = P_{k|k-1} \cdot H_k^T \cdot S_k^{-1} \qquad \ldots (13)$$

$$x^\wedge_{k|k} = x^\wedge_{k|k-1} + K_k \cdot e_k \qquad \ldots (14)$$

$$P_{k|k} = (I - K_k \cdot H_k) \cdot P_{k|k-1} \qquad \ldots (15)$$

Above equations (11) to (15) represent the observation update step in the Kalman filter. Equations (11) to (13) are calculated in order that an estimate $x^\wedge_{k|k}$ of equation (14) and a covariance matrix estimate $P_{k|k}$ of equation (15) may be calculated. The estimate $x^\wedge_{k|k}$ of the observation update step is calculated with use of a Kalman gain calculated from equation (13) and an observation residual $e_k$ calculated from equation (11). The observation residual is calculated through conversion of a predicted value into a space of an observation and from a resultant residual with respect to the observation. A covariance $S_k$ in the observation residual to be calculated from equation (12) is found from a covariance in a measurement and a covariance in the predicted value. The Kalman gain $K_k$ to be calculated from equation (13) is computed from a ratio of the covariance in the predicted value to the covariance in the observation residual.

By use of the values of equations (11) to (13) that are calculated in this manner, the estimate $x^\wedge_{k|k}$ and the covariance matrix estimate $P_{k|k}$ are calculated to be made into output of the observation step and output of the Kalman filter.

Subsequently, the variables $x_k$, $F_k$, and $G_k$ that are used in the Kalman filter will be described.

The variable $x_k$ represents the system to be estimated. A state to be estimated in the disclosure has the velocity v and a yaw rate ω. Therefore, $x_k = (v_k, \omega_k)^T$ holds.

The variable $F_k$ represents the time transition of the state $x_k$ and is expressed as equation (16) below.

The variable $w_k$ represents the system noise and is expressed as equation (17) below. In equation (17) below, $a_v$ is an acceleration in a travel direction of the vehicle M and $a_\omega$ is an acceleration in a turning direction of the vehicle M.

The variable Gk represents the time transition of the system noise and is expressed as equation (18) below. In equation (18) below, $\Delta t$ represents an interval between time k and time k-1 that is one clock before k.

$$F_k = \begin{pmatrix} 1 & 0 \\ 0 & 1 \end{pmatrix} \dots (16)$$

$$w_k = \begin{pmatrix} a_v \\ a_\omega \end{pmatrix} \dots (17)$$

$$Gk = \begin{pmatrix} \Delta t & 0 \\ 0 & \Delta t \end{pmatrix} \dots (18)$$

$Z_k$ is represented as $(v_k, \omega_k)^T$ based on the measurement. $R_k$ is the error covariance matrix of the measurement. Data measured by the first sensor unit 3 and the second sensor unit 5 is used for $Z_k$ and $R_k$. By substitution of above values into the algorithm of the Kalman filter, $x_k$ (that is, the velocity v and the yaw rate ω) is estimated.

Hereinbelow, Fig. 7 will be referred to. In the processing by the observation update unit 1595, the observation update step mentioned in description on the Kalman filter is carries out. The observation update unit 1595 outputs estimated results of the vehicle velocity and the yaw rate. In cases where there is no input of the observation into the observation update unit 1595, such processing as follows is carried out, for instance. That is, the observation update unit 1595 outputs the estimated results of the vehicle velocity and the yaw rate even if there is no input of the vehicle velocity outputted from the vehicle velocity selection unit 1591 and/or the yaw rate outputted from the yaw rate selection unit 1593. Then the observation update unit 1595 outputs the predicted value of the vehicle velocity and the predicted value of the yaw rate that are inputted into the observation update unit 1595, as the estimated results, without carrying out the observation update step for the Kalman filter.

The vehicle velocity prediction unit 1597 receives the estimate of the vehicle velocity, as input, from the observation update unit 1595. The vehicle velocity prediction unit 1597 predicts and outputs the vehicle velocity to be attained at time k+1 that is one clock later in response to inputted data. Processing of this prediction corresponds to the prediction step in the Kalman filter.

Into the yaw rate prediction unit 1599, the estimate of the yaw rate is inputted from the observation update unit 1595. The yaw rate prediction unit 1599 predicts and outputs the yaw rate to be attained at time k+1 that is one clock later in response to inputted data. Processing of this prediction corresponds to the prediction step in the Kalman filter.

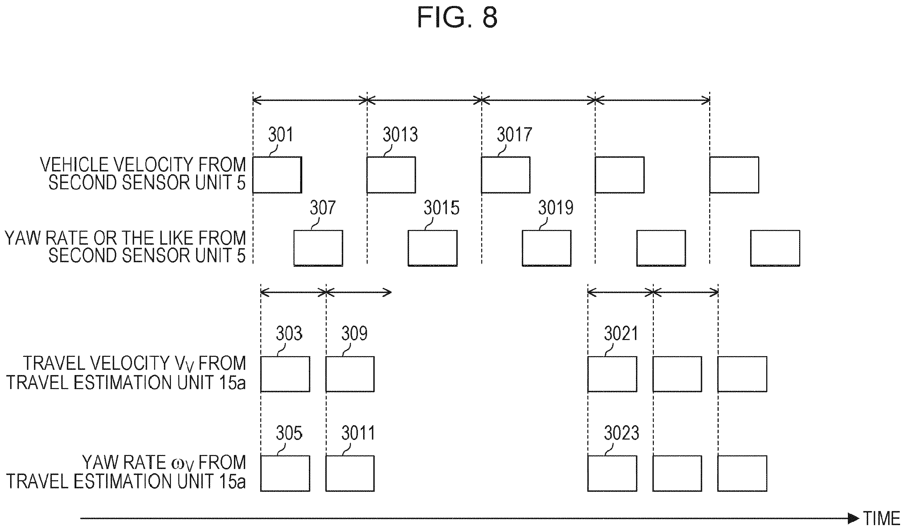

Fig. 8 illustrates input timing of the vehicle velocity and the yaw rate from the second sensor unit 5 into the filter unit 15b and input timing of the travel velocity $V_V$ and the yaw rate $\omega_V$ from the travel estimation unit 15a into the filter unit 15b. Therein, periods of the input timing are illustrated as lengths, along a direction of a time axis, of rectangular frames corresponding to reference numerals 301 to 3023.

As described above, there are two types of the velocity v of the vehicle M, that is, the vehicle velocity that is outputted from the second sensor unit 5 and the travel velocity $V_V$ that is outputted from the travel estimation unit 15a. Besides, there are two types of the yaw rate ω, that is, the yaw rate that is outputted from the second sensor unit 5 and the yaw rate $\omega_V$ that is outputted from the travel estimation unit 15a.

Intervals at which the second sensor unit 5 outputs the travel velocity and intervals at which the travel estimation unit 15a outputs the travel velocity $V_V$ may be different. Similarly, intervals at which the second sensor unit 5 outputs the yaw rate and intervals at which the travel estimation unit 15a outputs the yaw rate $\omega_V$ may be different. From the travel estimation unit 15a, the travel velocity $V_V$ and the yaw rate $\omega_V$ are outputted at fixed intervals in some periods or at random in other periods.

The filter unit 15b carries out the processing for the vehicle velocities v and the yaw rates ω in order of input thereof. In Fig. 8, a vehicle velocity from the second sensor unit 5 is initially inputted into the filter unit 15b (see reference numeral 301). After that, a travel velocity $V_V$ and a yaw rate $\omega_V$ are simultaneously inputted into the filter unit 15b (see reference numerals 303 and 305) and a yaw rate from the second sensor unit 5 is thereafter inputted (see reference numeral 307). Subsequently, a travel velocity $V_V$ and a yaw rate $\omega_V$ are simultaneously inputted into the filter unit 15b (see reference numerals 309 and 3011). Subsequently, a travel velocity and a yaw rate from the second sensor unit 5 are sequentially inputted a plurality of times (see reference numerals 3013, 3015, 3017, and 3019) and, after that, a travel velocity $V_V$ and a yaw rate $\omega_V$ are simultaneously inputted into the filter unit 15b (see reference numerals 3021 and 3023).

<3. Results of processing by state calculation apparatus>

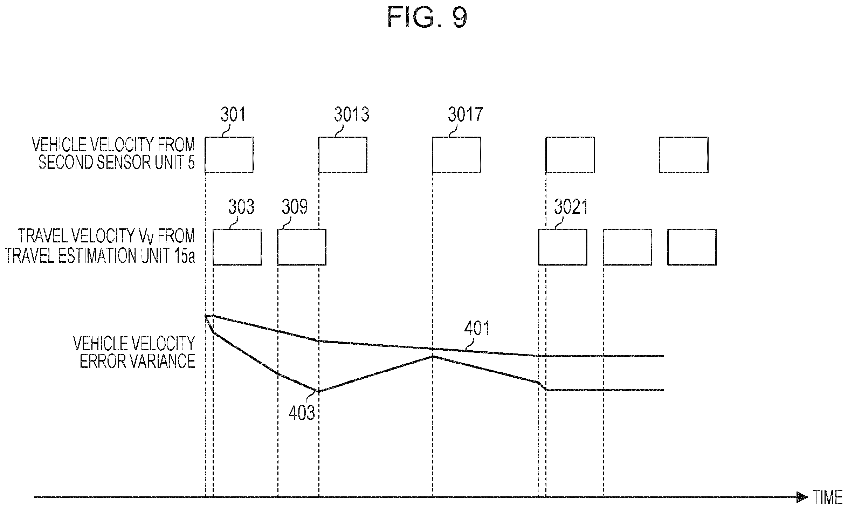

The filter unit 15b carries out the processing for inputted data in order of input thereof. Fig. 9 illustrates changes in error variances in the vehicle velocity in a covariance matrix estimate $P_{x|x}$ for the errors therein. In Fig. 9, periods of the input timing are illustrated as lengths, along a direction of a time axis, of rectangular frames corresponding to reference numerals 301 to 3021.

The input timing of vehicle velocities from the second sensor unit 5 and of travel velocities $V_V$ from the travel estimation unit 15a into the filter unit 15b in Fig. 9 is as illustrated in Fig. 8. In Fig. 9, therefore, configurations corresponding to configurations illustrated in Fig. 8 are provided with the same reference numerals as are used in Fig. 8. In the disclosure, the travel velocities $V_V$ that are obtained from the travel estimation unit 15a are assumed to be more accurate than the vehicle velocities that are outputted from the second sensor unit 5.

Error variance 401 in the vehicle velocity represents a change over time in the error variance in the vehicle velocity under a condition that the travel velocity $V_V$ from the travel estimation unit 15a is not inputted into the filter unit 15b and under a condition that the vehicle velocity from the second sensor unit 5 is inputted into the filter unit 15b. Each time the vehicle velocity 301, 3013, or 3017 from the second sensor unit 5 is inputted, the variance in the error decreases. Accordingly, the variance in the error converges to a value in a given range after input of a vehicle velocity from the second sensor unit 5 into the filter unit 15b is continually iterated a given number of times without input of the travel velocity $V_V$ from the travel estimation unit 15a into the filter unit 15b. The convergence value depends on an accuracy of the second sensor unit 5.

By contrast, error variance 403 in the vehicle velocity represents a change over time in the error variance in the vehicle velocity under a condition that the travel velocity $V_V$ from the travel estimation unit 15a is inputted into the filter unit 15b in addition to the vehicle velocities from the second sensor unit 5. After the input of the vehicle velocities from the second sensor unit 5 is started, the error variance 403 decreases faster than the error variance 401 that depends on the accuracy of the second sensor unit 5. This is because the travel estimation unit 15a has a higher measurement accuracy and shorter data input intervals than the second sensor unit 5 has. The error variance in a time section in which there is data input from both the second sensor unit 5 and the travel estimation unit 15a is smaller than the error variance 401 that depends on the accuracy of the second sensor unit 5. Thus an accuracy in the estimate of the vehicle velocity can be increased by the Kalman filter processing with use of both the vehicle velocities that are outputted from the second sensor unit 5 and the travel estimation unit 15a.

Based on the same logic as above description, also in the case of the yaw rate, an accuracy in the estimate of the yaw rate can be increased, as is the case with the vehicle velocity, by the Kalman filter processing of measurement results from the sensors of two types.

In the disclosure, the estimation processing Kalman filter is carried out with use of the observations of the vehicle velocity and the yaw rate and the variances therein as input. Thus the accuracy in the estimates of the vehicle velocity and the yaw rate can be increased in comparison with a case in which the variances are inputted as fixed values.

A concept that the estimate accuracy may be increased by the Kalman filter processing of the measurement results of the vehicle velocities of two types as described above will be described below. Measurements outputted from one of the sensors are assumed to have a mean $x_1$ and an error variance $P_1$. On the other hand, measurements outputted from the other of the sensors are assumed to have a mean $x_2$ and an error variance $P_2$. It is conceived that the different two types of measurement results of the error variances may be subjected to weighted averaging.

A result of the weighted averaging with use of the error variances $P_1$ and $P_2$ is designated by x and an error variance in the same is designated by P. Then x and P can be calculated as follows.

$$x = (P_2 \cdot x_1 + P_1 \cdot x_2)/(P_1 + P_2) \qquad \ldots (19)$$

$$P = P_1 \cdot P_2/(P_1 + P_2) \qquad \ldots (20)$$

Therefore, the error variance P posterior to the weighted averaging is smaller than the error variances $P_1$ and $P_2$ that are input values. By such weighted averaging processing as the Kalman filter with use of the vehicle velocity and the yaw rate obtained from the second sensor unit 5 and the travel velocity $V_V$ and the yaw rate $\omega_V$ found based on the target information from the first sensor unit 3, in the state calculation apparatus 1 according to the disclosure, the vehicle velocity and the yaw rate can be outputted more accurately even if the second sensor unit 5 outputs detection results different from actual behavior of the vehicle M due to a skid of the vehicle M, for instance.

<4. Supplementary note on embodiment>

With regard to the error variance in the yaw rate, the accuracy can be increased by use of measurements from the sensors of two types in pursuant to an approach of the weighted averaging.

In description on the above embodiment, the vehicle M has been used as an example of the moving object. The moving object, however, may be a motorcycle or an industrial robot.

In the state calculation apparatus 1, the travel estimation unit 15a and the filter unit 15b may be implemented as computer programs. The computer programs may be provided as programs stored in such a distribution medium as DVD or may be stored in server equipment on a network so as to be downloadable via the network, for instance.

<5. Modification>

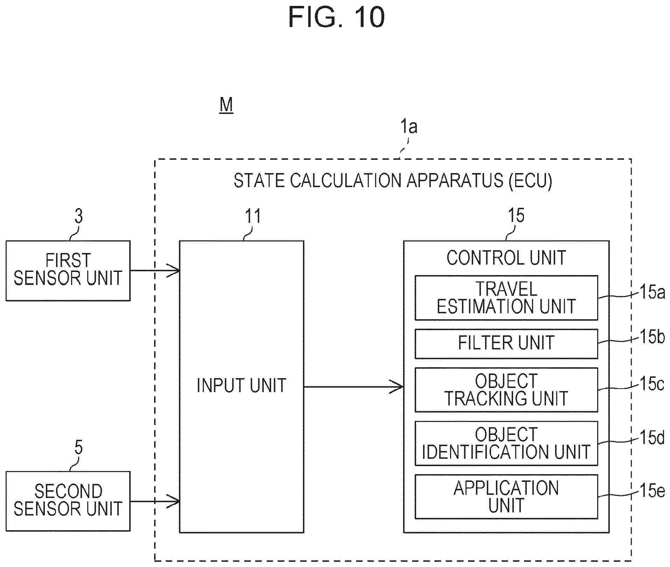

With reference to Fig. 10, subsequently, a state calculation apparatus 1a that is a modification to the embodiment will be described.

The state calculation apparatus 1 a of Fig. 10 is different from the state calculation apparatus 1 described above in that the state calculation apparatus 1a executes programs other than the above programs. In Fig. 10, configurations corresponding to configurations illustrated in Fig. 1 are provided with the same reference characters as are used in Fig. 1 and description thereon may be omitted.

The control unit 15 includes the travel estimation unit 15a, the filter unit 15b, an object tracking unit 15c, an object identification unit 15d, and an application unit 15e. The state calculation apparatus 1a includes a microcomputer, just as the state calculation apparatus 1 includes. The microcomputer of the state calculation apparatus 1 a executes programs other than the programs the microcomputer of the state calculation apparatus 1 executes. The microcomputer of the state calculation apparatus 1 a functions as the object tracking unit 15c, the object identification unit 15d, and the application unit 15e, in addition to the travel estimation unit 15a and the filter unit 15b that have been described above.

The object tracking unit 15c tracks a target based on the target information from the first sensor unit 3 and based on the vehicle velocity and the yaw rate that are outputted from the filter unit 15b. To track a target means to generate tracking information by following the target information over a plurality of frames, such as positions, distances, travel velocities, and travel direction of the target that are observed by the first sensor unit 3. A state of the target is estimated when the tracking is carried out. Therefore, measurement accuracy for the vehicle velocity and the yaw rate from the filter unit 15b has an influence on performance in the tracking. Accordingly, the performance in the tracking for the target can be improved by the vehicle velocity and the yaw rate that are given from the filter unit 15b in the disclosure.

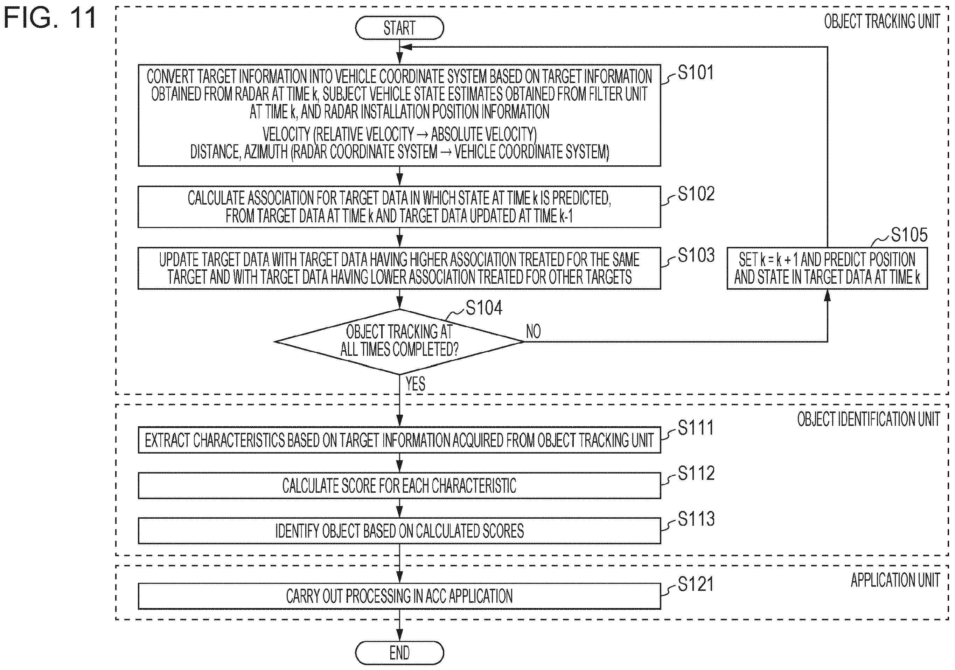

Fig. 11 shows a flow chart illustrating processing in the object tracking unit 15c, the object identification unit 15d, and the application unit 15e of Fig. 10. Hereinbelow, the processing of steps S101 to S121 in Fig. 11 will be described.

In step S101, the object tracking unit 15c converts the target information into a vehicle coordinate system based on the target information obtained from a radar at time k, subject vehicle state estimates obtained from the filter unit 15b at the time k, and radar installation position information. In relation to the velocity, a relative velocity is converted into an absolute velocity. In relation to the distance and the azimuth, a radar coordinate system is converted into the vehicle coordinate system.

In step S102, the object tracking unit 15c calculates association for the target data in which a state at the time k is predicted, based on the target data at the time k and the target data updated at time k-1. In step S103, the target data is updated with the target data having higher association treated for the same target and with the target data having lower association treated for other targets. In step S104, the object tracking unit 15c determines whether object tracking processing at all times has been completed or not.

If the object tracking unit 15c determines, in step S104, that the object tracking processing at all the times has been completed, the flow proceeds to step S111. If it is determined that the object tracking processing at all the times has not been completed, the flow proceeds to step S105. In step S105, the object tracking unit 15c predicts a position and a state in the target data at subsequent time and the flow returns to the processing of step S101.

In step S111, the object identification unit 15d extracts characteristics of an object based on the tracking information outputted from the object tracking unit 15c. In step S112, the object identification unit 15d calculates a score for each of the extracted characteristics of the object. In step S113, the object identification unit 15d identifies the object based on the calculated scores and outputs results of identification to the application unit 15e. Then the flow proceeds to the processing of step S121. Herein, the identification of an object is to determine whether a tracked target is a private vehicle, a large vehicle such as a truck, a human, a motorcycle, a bicycle, an animal such as a cat and a dog, or a construction such as a building and a bridge, for instance.

In step S121, the application unit 15e attains various functions for supporting operations based on the tracking information outputted from the object tracking unit 15c and the results of the identification from the object identification unit 15d.

The application unit 15e automatically controls an accelerator and brakes in order to keep a steady distance between the subject vehicle and a vehicle traveling ahead of the subject vehicle, for instance. The application unit 15e further has a function of adaptive cruise control (ACC) in which a warning is given to a driver as appropriate.

The application unit 15e may have a function of collision damage mitigation brakes for prediction of a collision with an obstacle in front, warning against the collision, and control over braking on the subject vehicle for mitigation of collision damage, for instance.

The application unit 15e may have a function of rear side vehicle detection warning in which a warning is given for urging check when a traveling vehicle exists obliquely behind upon a lane change during traveling, for instance.

The application unit 15e may have a function of automatic merging in which automatic merging onto an expressway with determination of status of other vehicles on a lane as an object of merging is attained, for instance.

<6. Supplementary note on modification>

In description on the above modification, the object tracking unit 15c, the object identification unit 15d, and the application unit 15e are mounted on the ECU 1 a which includes the travel estimation unit 15a and the filter unit 15b. Such a configuration, however, is not restrictive and the object tracking unit 15c, the object identification unit 15d, and the application unit 15e may be mounted on an ECU different from the ECU including the travel estimation unit 15a and the filter unit 15b.

The present disclosure can be realized by software, hardware, or software in cooperation with hardware.

Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a field programmable gate array (FPGA) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The state calculation apparatus, a state calculation method, and a recording medium storing a program according to the disclosure enable accurate calculation of a state of a vehicle and can be applied to on-board applications.

**Claims**

1. A state calculation apparatus comprising:

   an receiver that receives azimuths of a plurality of objects existing around a vehicle and relative velocities of the objects with respect to the vehicle, the azimuths and the relative velocities being detected by a first sensor used for the vehicle, as target information, and that receives a velocity and a travel direction of the vehicle which are detected by a second sensor installed on the vehicle and having an error variance, as state information; and
   a controller that calculates a plurality of velocities and a plurality of travel directions of the vehicle with use of the state information and based on a plurality of the azimuths and a plurality of the relative velocities which are extracted from the target information and that outputs at least either of a velocity or a travel direction of the vehicle by using a specified filter to filter a mean value of and an error variance in the plurality of calculated velocities of the vehicle, a mean value of and an error variance in the plurality of calculated travel directions of the vehicle, and at least either of the velocity or the travel direction of the vehicle which is detected by the second sensor.

2. The state calculation apparatus according to Claim 1, wherein

the controller calculates the plurality of velocities and the plurality of travel directions of the vehicle with use of the state information and based on target information that relates to stationary objects existing at different azimuths among the target information.

3. The state calculation apparatus according to Claim 1, wherein
the controller uses a Kalman filter to filter the mean value of and the error variance in the calculated velocities of the vehicle, the mean value of and the error variance in the calculated travel directions of the vehicle, the velocity and the travel direction of the vehicle that are the state information, and error variances in the velocity and the travel direction of the vehicle that are the state information.

4. A state calculation method comprising:

receiving azimuths of a plurality of objects existing around a vehicle and relative velocities of the objects with respect to the vehicle, the azimuths and the relative velocities being detected by a first sensor used for the vehicle, as target information, and receiving a velocity and a travel direction of the vehicle which are detected by a second sensor installed on the vehicle and having an error variance, as state information; and
calculating a plurality of velocities and a plurality of travel directions of the vehicle with use of the state information and based on a plurality of the azimuths and a plurality of the relative velocities which are extracted from the target information and outputting at least either of a velocity or a travel direction of the vehicle by using a specified filter to filter a mean value of and an error variance in the plurality of calculated velocities, a mean value of and an error variance in the plurality of calculated travel directions, and at least either of the velocity or the travel direction which is detected by the second sensor.

5. A recording medium storing a program for a computer to perform:

receiving azimuths of a plurality of objects existing around a vehicle and relative velocities of the objects with respect to the vehicle, the azimuths and the relative velocities being detected by a first sensor used for the vehicle, as target information, and receiving a velocity and a travel direction of the vehicle which are detected by a second sensor installed on the vehicle and having an error variance, as state information; and
calculating a plurality of velocities and a plurality of travel directions of the vehicle with use of the state information and based on a plurality of the azimuths and a plurality of the relative velocities which are extracted from the target information and outputting at least either of a velocity or a travel direction of the vehicle by using a specified filter to filter a mean value of and an error variance in the plurality of calculated velocities, a mean value of and an error variance in the plurality of calculated travel directions, and at least either of the velocity or the travel direction which is detected by the second sensor.

# FIG. 1

# FIG. 2

# FIG. 3

# FIG. 4

FIG. 5

FIG. 6

START

CALCULATE DOPPLER VELOCITY
RANGE OF STATIONARY OBJECTS — S001

COLLECT SAMPLES OF STATIONARY OBJECTS — S003

CALCULATE CENTER OF GRAVITY OF DOPPLER VELOCITIES
OF STATIONARY OBJECT SAMPLES FOR EACH AZIMUTH — S005

S007

CALCULATION OF CENTERS OF GRAVITY
AT ALL AZIMUTHS COMPLETED?

NO

YES

PAIRING FOR AZIMUTHS AND CENTERS
OF GRAVITY NUMBERING IN N — S009

PRODUCE SAMPLE PAIRS NUMBERING IN N/2 — S011

CALCULATE TRAVEL AZIMUTH $\theta_S$ AND VELOCITY $V_S$ — S013

CALCULATE VELOCITY $V_V$ AND YAW RATE $\omega_V$
OF VEHICLE REFERENCE POINT — S014

S015

CALCULATION FOR ALL
SAMPLE PAIRS COMPLETED?

NO

YES

TRIMMED MEAN PROCESSING FOR ESTIMATES — S017

END

## FIG. 7

VEHICLE VELOCITY FROM SECOND SENSOR UNIT 5 ⟶ [1591]

TRAVEL VELOCITY $V_V$ FROM TRAVEL ESTIMATION UNIT 15a ⟶ [1593]

YAW RATE OR THE LIKE FROM SECOND SENSOR UNIT 5 ⟶

YAW RATE $\omega_V$ FROM TRAVEL ESTIMATION UNIT 15a ⟶

VEHICLE VELOCITY ERROR VARIANCE FROM SECOND SENSOR UNIT 5 ⟶ [15101]

ERROR VARIANCE $P_{VV}$ FROM TRAVEL ESTIMATION UNIT 15a ⟶ [15103]

ERROR VARIANCE IN YAW RATE OR THE LIKE FROM SECOND SENSOR UNIT 5 ⟶

ERROR VARIANCE $P_{\omega V}$ FROM TRAVEL ESTIMATION UNIT 15a ⟶

**OBSERVATION UPDATE UNIT** [1595]

⟶ VEHICLE VELOCITY

⟶ YAW RATE

**VEHICLE VELOCITY PREDICTION UNIT** [1597]

**YAW RATE PREDICTION UNIT** [1599]

EP 3 301 474 A1

# FIG. 8

VEHICLE VELOCITY FROM
SECOND SENSOR UNIT 5

301   3013   3017

YAW RATE OR THE LIKE FROM
SECOND SENSOR UNIT 5

307   3015   3019

TRAVEL VELOCITY $V_V$ FROM
TRAVEL ESTIMATION UNIT 15a

303   309   3021

YAW RATE $\omega_V$ FROM
TRAVEL ESTIMATION UNIT 15a

305   3011   3023

TIME

# FIG. 9

# FIG. 10

M

1a

**STATE CALCULATION APPARATUS (ECU)**

3

FIRST
SENSOR UNIT

5

SECOND
SENSOR UNIT

11

INPUT UNIT

15

CONTROL UNIT

| TRAVEL ESTIMATION UNIT | 15a |
| FILTER UNIT | 15b |
| OBJECT TRACKING UNIT | 15c |
| OBJECT IDENTIFICATION UNIT | 15d |
| APPLICATION UNIT | 15e |

# FIG. 11

**OBJECT TRACKING UNIT**

START

CONVERT TARGET INFORMATION INTO VEHICLE COORDINATE SYSTEM BASED ON TARGET INFORMATION OBTAINED FROM RADAR AT TIME k, SUBJECT VEHICLE STATE ESTIMATES OBTAINED FROM FILTER UNIT AT TIME k, AND RADAR INSTALLATION POSITION INFORMATION
VELOCITY (RELATIVE VELOCITY → ABSOLUTE VELOCITY)
DISTANCE, AZIMUTH (RADAR COORDINATE SYSTEM → VEHICLE COORDINATE SYSTEM) — S101

CALCULATE ASSOCIATION FOR TARGET DATA IN WHICH STATE AT TIME k IS PREDICTED, FROM TARGET DATA AT TIME k AND TARGET DATA UPDATED AT TIME k-1 — S102

UPDATE TARGET DATA WITH TARGET DATA HAVING HIGHER ASSOCIATION TREATED FOR THE SAME TARGET AND WITH TARGET DATA HAVING LOWER ASSOCIATION TREATED FOR OTHER TARGETS — S103

SET k = k + 1 AND PREDICT POSITION AND STATE IN TARGET DATA AT TIME k — S105

OBJECT TRACKING AT ALL TIMES COMPLETED? — S104   NO

YES

**OBJECT IDENTIFICATION UNIT**

EXTRACT CHARACTERISTICS BASED ON TARGET INFORMATION ACQUIRED FROM OBJECT TRACKING UNIT — S111

CALCULATE SCORE FOR EACH CHARACTERISTIC — S112

IDENTIFY OBJECT BASED ON CALCULATED SCORES — S113

**APPLICATION UNIT**

CARRY OUT PROCESSING IN ACC APPLICATION — S121

END

Europäisches
Patentamt

European
Patent Office

Office européen
des brevets

## EUROPEAN SEARCH REPORT

Application Number

EP 17 18 7861

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 390 680 A1 (MITSUBISHI ELECTRIC CORP [JP]) 30 November 2011 (2011-11-30) * paragraphs [0009] - [0013], [0015] - [0034], [0040], [0049] - [0050], [0061], [0069], [0091] - [0098]; figures 1,2, 6,8,11 * * paragraphs [0091] - [0098]; figure 16 * * paragraphs [0146] - [0178]; figure 28 * ----- | 1-5 | INV. G01S13/42 G01S13/93 G01S13/86 G01S13/60 |
| X | DE 10 2016 102002 A1 (GM GLOBAL TECH OPERATIONS LLC [US]) 4 August 2016 (2016-08-04) * paragraphs [0020], [0029] - [0044], [0053]; figures 2, 3 * ----- | 1-5 | |
| X | DE 10 2008 026397 A1 (GM GLOBAL TECH OPERATIONS INC [US]) 29 January 2009 (2009-01-29) * paragraphs [0006], [0012] - [0051]; figures 1-4 * ----- | 1-5 | |
| X | EP 0 899 543 A2 (MANNESMANN VDO AG [DE]) 3 March 1999 (1999-03-03) * paragraphs [0009], [0019], [0043] - [0050]; figure 6 * ----- | 1-5 | TECHNICAL FIELDS SEARCHED (IPC) G01S B60T |
| X | EP 2 590 152 A1 (HONDA MOTOR CO LTD [JP]) 8 May 2013 (2013-05-08) * paragraphs [0004], [0015], [0022], [0023], [0025], [0032] - [0034]; figures 4, 6 * ----- | 1-5 | |
| A | EP 3 035 077 A1 (PANASONIC IP MAN CO LTD [JP]) 22 June 2016 (2016-06-22) * the whole document * ----- | 1-5 | |

The present search report has been drawn up for all claims

| Place of search | Date of completion of the search | Examiner |
|---|---|---|
| Munich | 12 February 2018 | Schmelz, Christian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 17 18 7861

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2018

| Patent document cited in search report | | Publication date | Patent family member(s) | | Publication date |
|---|---|---|---|---|---|
| EP 2390680 | A1 | 30-11-2011 | CN 102288957 A | | 21-12-2011 |
| | | | EP 2390680 A1 | | 30-11-2011 |
| | | | JP 5610847 B2 | | 22-10-2014 |
| | | | JP 2011247721 A | | 08-12-2011 |
| | | | US 2011295549 A1 | | 01-12-2011 |
| DE 102016102002 A1 | | 04-08-2016 | CN 105842684 A | | 10-08-2016 |
| | | | DE 102016102002 A1 | | 04-08-2016 |
| | | | US 2016223661 A1 | | 04-08-2016 |
| DE 102008026397 A1 | | 29-01-2009 | CN 101320089 A | | 10-12-2008 |
| | | | DE 102008026397 A1 | | 29-01-2009 |
| | | | US 2010017128 A1 | | 21-01-2010 |
| EP 0899543 | A2 | 03-03-1999 | DE 19736965 C1 | | 06-05-1999 |
| | | | EP 0899543 A2 | | 03-03-1999 |
| EP 2590152 | A1 | 08-05-2013 | CN 102959600 A | | 06-03-2013 |
| | | | EP 2590152 A1 | | 08-05-2013 |
| | | | JP 5746695 B2 | | 08-07-2015 |
| | | | JP WO2012001896 A1 | | 22-08-2013 |
| | | | US 2013110391 A1 | | 02-05-2013 |
| | | | WO 2012001896 A1 | | 05-01-2012 |
| EP 3035077 | A1 | 22-06-2016 | EP 3035077 A1 | | 22-06-2016 |
| | | | JP 2016118406 A | | 30-06-2016 |
| | | | US 2016178742 A1 | | 23-06-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014191596 A